# EUROPÄISCHE PATENTSCHRIFT

(11) **EP 0 828 930 B1**
(45) Veröffentlichungstag und Bekanntmachung des Hinweises auf die Patenterteilung: **19.06.2002**
(21) Anmeldenummer: 97922817.8
(22) Anmeldetag: 26.03.1997
(51) Int. Cl.: F02C 3/20

(54) **VERFAHREN ZUM BETREIBEN EINER GASTURBINE MIT SILANÖL ALS BRENNSTOFF**
METHOD OF OPERATING A GASTURBINE WITH SILANOL AS FUEL
PROCEDE PERMETTANT DE FAIRE FONCTIONNER UNE TURBINE A GAZ AU MOYEN DE SILANOL COMME CARBURANT

(30) Priorität: 29.03.1996 DE 19612507
(43) Veröffentlichungstag der Anmeldung: 18.03.1998
(73) Patentinhaber: Kunkel, Klaus, 40882 Ratingen (DE)
(72) Erfinder: PLICHTA, Peter, D-40225 Düsseldorf (DE); KRAMER, Peter, D-88090 Immenstaad (DE); STRAUB, Dieter, D-81827 München (DE)
(74) Vertreter: Patentanwälte Hauck, Graalfs, Wehnert, Döring, Siemons
(86) Internationale Anmeldenummer: DE9700612
(87) Internationale Veröffentlichungsnummer: WO9737115

(56) Entgegenhaltungen:
- DE-A- 2 231 008
- DE-A- 4 215 835
- DE-A- 4 437 524
- GB-A- 999 581

## Beschreibung

Die vorliegende Erfindung betrifft ein Verfahren zum Antreiben einer Welle sowie einen Antrieb zur Durchführung eines derartigen Verfahrens.

Aus der DE-OS-22 31 008 ist es bekannt, Tetrasilan (Si₄H₁₀) als Raketenbrennstoff zu verwenden. Auch in der DE 42 15 835 C2 sind bereits Siliciumwasserstoffe, vorzugsweise Silanöle, als Raketenbrennstoff vorgeschlagen worden. Die Darstellung von derartigen Silanölen ist in der DE-PS 21 39 155 beschrieben. Bei den in diesen Veröffentlichungen unterbreiteten Vorschlägen wird immer davon ausgegangen, daß die Silanöle zusammen mit flüssigem Sauerstoff, flüssigem Chlor oder Fluor verbrannt werden.

In der nicht vorveröffentlichten deutschen Patentanmeldung P 44 37 524.7 werden ein Verfahren zum Betreiben eines nach dem Rückstoßprinzip arbeitenden Antriebs eines Flugkörpers sowie ein Antrieb zur Durchführung des Verfahrens beschrieben. Der Antrieb wird so betrieben, daß man Siliciumwasserstoffverbindungen mit Stickstoff und/oder Stickstoffverbindungen bei erhöhten Temperaturen in Gegenwart eines Oxidationsmittels für den Wasserstoff der Siliciumwasserstoffverbindungem reagieren läßt. Der Stickstoff und das Oxidationsmittel können vorzugsweise der Erdatmosphäre entnommen werden, so daß ein entsprechendes Oxidationsmittel für die Siliciumwasserstoffverbindungen im Flugkörper nicht mitgeführt werden muß. Als Siliciumwasserstoffverbindungen werden vorzugsweise Silanöle verbrannt.

Der vorliegenden Erfindung liegt die Aufgabe zugrunde, ein Verfahren zum Antreiben einer Welle sowie einen Antrieb hierfür zu schaffen, das bzw. der mit sehr hohen Temperaturen und entsprechend hohem Wirkungsgrad arbeitet und umweltschonend ist.

Diese Aufgabe wird erfindungsgemäß durch ein Verfahren zum Antreiben einer Welle mit den folgenden Schritten gelöst:
a. Einführen von Siliciumwasserstoffen und von Luft in den ersten Teil einer doppelten Brennkammer.
b. Reagierenlassen des Wasserstoffes der Siliciumwasserstoffe mit einem Unterschuß von Sauerstoff der eingeführten Luft zur Erzeugung von erhöhten Temperaturen;
c. Reagierenlassen des Überschusses des eingeführten Luftstickstoffes bei den erhöhten Temperaturen mit dem Silicium der Siliciumwasserstoffe unter Bildung von Siliciumnitrid;
d. Abführung der Verbrennungsgase und -stäube und des nicht verbrannten Wasserstoffanteils aus dem ersten Teil in den zweiten Teil der doppelten Brennkammer und Vermischung mit einer großen Menge Luft unter Nachbrennen des Wasserstoffs; und
e. Weiterleiten der Verbrennungsgase und -stäube in eine Turbinenkammer zur Beaufschlagung von mit einer Welle verbundenen Turbinenschaufeln.

Das N₂-Molekül ist als solches trotz seiner Dreifachbindung extrem träge und neigt nur bei Elektronenbeschuß, beispielsweise bei Gewittern, dazu, seine Bindung zu öffnen und mit Sauerstoff zu Stickoxiden zu reagieren. Heißer Stickstoff reagiert jedoch oberhalb von 1400° C mit fein verteiltem Silicium zu Siliciumnitrid Si₃N₄. Die Gründe für diese Stickstoffverbrennung liegen in der Tatsache, daß Silicium im Gegensatz zum Kohlenstoff keine Doppel- oder Dreifachbindungen eingehen kann. Ein besonders gutes Reaktionsverhalten zeigt Stickstoff mit Siliciumwasserstoffverbindungen. Die Erfindung macht sich diese Erkenntnis zunutze und setzt gezielt Luftstickstoff zur Reaktion mit Siliciumwasserstoffverbindungen ein, wodurch sich ein besonders wirksamer Antrieb erreichen läßt. Stickstoff steht in großen Mengen in der Luft zur Verfügung, so daß sich ein hoher Wirkungsgrad bei niedrigen Kosten ergibt.

Bei der Verbrennung von Siliciumwasserstoffverbindungen, insbesondere Silanölen, mit komprimierter Luft reagiert der Sauerstoffanteil mit Wasserstoff der Silankette nach der Gleichung

4H + O₂ = 2H₂O.

Bei dieser Wasserstoff-Sauerstoff-Verbrennung werden Temperaturen von ca. 3.000° C erreicht. Diese Temperatur ist ausreichend, um das N₂-Molekül, das durch die Zufuhr der komprimierten Luft zur Verfügung gestellt wird, zu spalten. Nach der Gleichung

4N + 3Si = Si₃N₄

greifen die Stickstoffrakikale nun mit extremer Heftigkeit die freien Siliciumatome an. Es bildet sich Siliciumnitrid, das ein Molekulargewicht von 140 hat und damit dreimal so schwer ist wie Kohlendioxid.

Es versteht sich, daß die geschilderte Reaktion nur bei entsprechend hohen Temperaturen abläuft. An Luft verbrennen Silanöle nach Zündung lediglich zu rotbraunamorphem Siliciummonoxid, da der Verbrennungssubstanz bei der Blitzartigkeit der Verbrennung zu wenig Sauerstoff zur Verfügung steht. Die Reaktion mit Stickstoff unterbleibt, da Stickstoff unter diesen Bedingungen keine freien Radikale bildet.

Mit anderen Worten, bei hinreichend hoher Temperatur werden die Siliciumwasserstoffverbindungen letztlich in Si und H thermisch zerlegt. Die hochreaktiven H-Atome binden den Luftsauerstoff zu Wasser. Die dabei freiwerdende Bindungsenthalpie von H₂O liefert die für das Erreichen hoher Verbrennungstemperaturen notwendige Energie. Oberhalb von etwa 2.500 K nimmt die N₂-Dissoziation stark zu. Da der Sauerstoff im Wasser gebunden ist, reagiert der höchstreaktive atomare Stickstoff mit Si unter Bildung Si₃N₄. Bei dieser Reaktion wird die sehr große Bindungsenthalpie von Si₃N₄ frei. Sie beläuft sich auf - 745 kJ/Mol bei T = 298 K.

Da Luft nur zu 20 % aus Sauerstoff besteht und die Sauerstoff/Wasserstoffreaktion energetisch günstiger ist als die Sauerstoff/Siliciumreaktion, kann das Verhältnis der Lufteinspeisung zur Silanwasserstoffzuführung so eingestellt werden, daß ein Teil des Wasserstoffs nicht verbrennt, wohingehend die Stickstoffverbrennung des Siliciums quantitativ abläuft. Auf diese Weise wird verhindert, daß überhaupt Siliciumoxide entstehen. Bei einer herkömmlichen Strahlturbine werden die 80 % Luftstickstoff unverbrannt mitbeschleunigt. Dasselbe tritt dann auf, wenn Siliciumwasserstoffe mit einem Überschuß von Luft verbrannt werden. Die entstehenden Siliciumoxide würden verhindern, daß der Stickstoff mitverbrannt wird. Das geschilderte Verfahren stellt somit ein luftatmendes Raketentriebwerk dar, da kein Oxidationstank mitgeführt werden muß und das Luftsauerstoff/Stickstoffgemisch zu 100 % verbrannt wird.

Vorzugsweise werden als Siliciumwasserstoffverbindungen Silanöle, und zwar insbesondere solche mit einer Kettenlänge von Si₅H₁₂ bis Si₉H₂₀, eingesetzt. Derartige Silanöle sind in der bereits erwähnten DE-PS 21 39 155 beschrieben. Erstaunlicherweise sind derartige langkettige Silane an Luft nicht mehr selbstentzündlich. Sie besitzen die Konsistenz von Paraffinölen und sind großtechnisch einfach herzustellen. Sie sind pumpbar, so daß sie ohne Probleme einer geeigneten Brennkammer zugeführt werden können.

Bei dem erfindungsgemäßen Verfahren entstehen Wasserdampf und Siliciumnitrid-Stäube. Beide Substanzen sind nicht toxisch und stellen keine Umweltbelastung dar. Durch Filtern der Verbrennungsgase nach dem Verlassen der Turbinenkammer können die entstehenden Stäube gesammelt werden, während die im wesentlichen aus Wasserdampf bestehenden Gase in die Atmosphäre abgeführt werden können. Das Verfahren sowie der entsprechende Antrieb sind daher äußerst umweltschonend.

Zur Verbesserung des Wirkungsgrades wird vorzugsweise komprimierte Luft in die Brennkammer eingeführt. Die Luft wird dabei der Umgebung entnommen, mit Hilfe eines Verdichters komprimiert und in die Brennkammer eingespeist. Der Verdichter wird dabei vorzugsweise von der Welle angetrieben.

Es wird also Luft der Atmosphäre entnommen und dann vorzugsweise komprimiert. Durch Kontakt der Luftleitung mit den Wänden der doppelten Brennkammer werden diese gekühlt und somit vor dem Verglühen geschützt. Die auf über 1500° erhitzte Luft trägt dazu bei, die N₂-Dissoziation einzuleiten. Es versteht sich, daß die Brennkammer aus dazu geeigneten Metallen bestehen muß.

Um bei dem erfindungsgemäßen Verfahren Kosten zu sparen, aber auch um die Silicium/Sauerstoffverbrennung völlig auszuschließen, kann es von Vorteil sein, den Siliciumwasserstoffen pulverfömiges Silicium oder Metallsilicide, z.B. Magnesiumsilicid, zuzusetzen. Es ist bekannt, daß Magnesium mit Stickstoff unter Abgabe von großer Wärme reagiert.

Nach dem Starten der geschilderten Verbrennung in der ersten Kammer der doppelten Brennkammer wird nach Einstellung der entsprechenden Betriebstemperaturen das Verfahren in der geschilderten Weise ablaufen und ein Teil des unverbrannten Wasserstoffs zusammen mit dem heißen H₂O-Si₃N₄-Gemisch mit einer Temperatur zwischen 2500 bis 3000° in den zweiten Teil der doppelten Brennkammer (Nachbrennkammer) strömen. Diese Gase wären viel zu heiß, um mittels Turbinenblättern eine Welle anzutreiben. Es wird deshalb im zweiten Teil der Brennkammer direkt Wärme zum Komprimieren von kalter Luft eingesetzt.

Es wird vom Verdichter komprimierte Kaltluft über Regler in den oberen Teil der zweiten Brennkammer eingeleitet. Die über 2500° heißen Verbrennungsgase werden mit der mehrfachen Menge Luft abgekühlt, wobei gleichzeitig der unverbrannte Wasserstoff nachbrennt. Auf diese Weise entstehen große Mengen von in Arbeit umwandelbaren Turbinengasen, die in eine Turbinenkammer eingeführt werden und dort die Turbinenschaufeln antreiben. Die Turbinenwelle ist, wie schon erwähnt, mit dem Luftverdichter gekoppelt.

Der Turbinenkammerauslaß führt zweckmäßigerweise in eine Filterkammer, die einen zur Atmosphäre führenden Auslaß besitzt. In der Filterkammer werden die durch die Reaktion gebildeten Siliciumnitridstäube zurückgehalten, so daß im wesentlichen nur Wasserdampf in die Atmosphäre abgegeben wird.

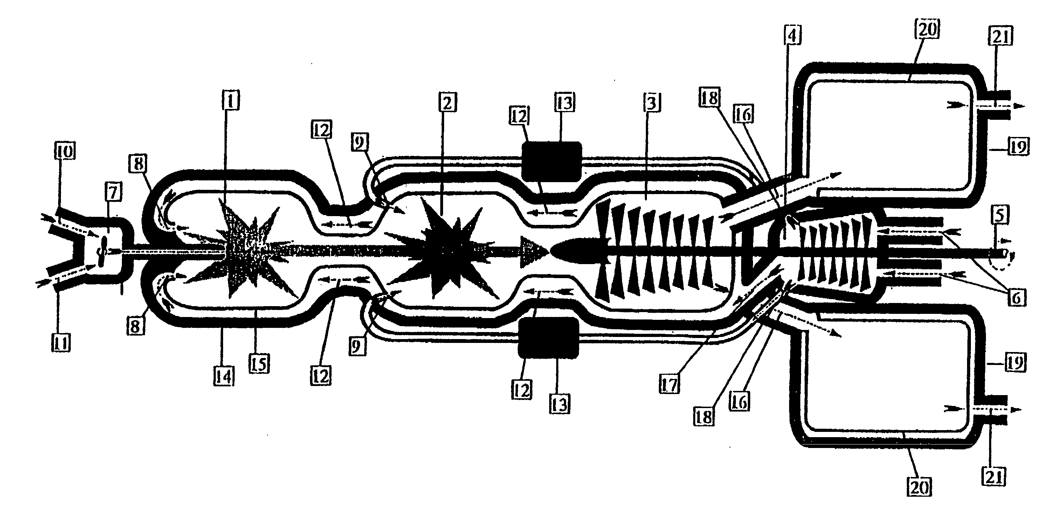

Die Erfindung wird nachfolgend anhand eines Ausführungsbeispiels in Verbindung mit der Zeichnung im einzelnen erläutert.

Die einzige Figur zeigt einen schematischen Längsschnitt durch einen erfindungsgemäß ausgebildeten Antrieb.

Der Antrieb besteht aus einem Gehäuse, das in der Figur von links nach rechts hintereinander eine Hauptbrennkammer 1, eine Nachbrennkammer 2, eine Turbinenkammer 3 und eine Kompressorkammer 4 aufweist. Zwischen den einzelnen Kammern ist das Gehäuse verengt, so daß geeignete Verbindungskanäle gebildet sind. Es versteht sich, daß das Gehäuse aus geeigneten Materialien besteht bzw. mit geeigneten Auskleidungen versehen ist, um die insbesondere in der Hauptbrennkammer 1 auftretenden erhöhten Temperaturen (bis zu 3000° C) sowie die auftretenden erhöhten Drücke aushalten zu können.

Am linken Ende der Figur befindet sich eine Brennstoffmischkammer 7, in die eine Leitung 10 zur Zuführung von Silanöl und eine Leitung 11 zur Zuführung von Silicium/Metallsilicidstaub münden. In der Mischkammer 7 ist eine geeignete Mischvorrichtung angeordnet. Von der Mischkammer führt ein Kanal in die Hauptbrennkammer 1. Seitlich vom zentralen Zuführkanal für den Brennstoff (Silanöl + Si/Metallsilicid) ist ringförmig eine Vielzahl von Luftzuführöffnungen 8 angeordnet, die von einer die Hauptbrennkammer 1, die Nachbrennkammer 2 und die Turbinenkammer 3 ringförmig umgebenden Heißluftzuführleitung 12 gespeist werden. Die Heißluftzuführleitung 12 steht mit einem Auslaß 17 der Verdichterkammer 4 in Verbindung, die ferner einen Auslaß 18 aufweist, der mit einer Kaltluftzuführleitung 9 in Verbindung steht, die seitlich in die Nachbrennkammer 2 mündet. Die Kaltluftzuführleitung 9 durchläuft einen Regler 13, mittels dem die Kaltluftzufuhr in die Nachbrennkammer geregelt werden kann.

Zentrisch in der Turbinenkammer 3 und in der Kompressorkammer 4 ist eine sich durch beide Kammern erstreckende Welle 5 angeordnet, die durch die in der Hauptbrennkammer und der Nachbrennkammer ablaufenden Reaktionen in Drehungen versetzt wird und beispielsweise mechanische Energie oder über einen Generator elektrische Energie zur Verfügung stellen kann. In der Turbinenkammer 3 befinden sich an der Welle Turbinenschaufeln, die von den aus der Nachbrennkammer in die Turbinenkammer eindringenden Verbrennungsgasen bzw. - stäuben beaufschlagt werden und hierdurch die Welle 5 in Drehungen versetzen. Durch die sich drehende Welle 5 verdichten in der Verdichterkammer 4 angeordnete Schaufeln über Einlässe 6 eintretende Luft, die über die Auslässe 17 und 18 in die Leitungen 9 und 12 eingeführt wird.

Die Turbinenkammer 3 steht über Auslässe für die Verbrennungsgase bzw. -stäube mit Filterkästen 19 in Verbindung, in denen auswechselbare Filtersäcke 20 angeordnet sind. Diese Filtersäcke 20 halten die Stäube (im wesentlichen Siliciumnitrid) zurück, während die Verbrennungsgase (im wesentlichen Wasserdampf) über Auslässe 21 an die Atmosphäre abgegeben werden.

Der vorstehend beschriebene Antrieb funktioniert in der folgenden Weise:
Silanöl wird über die Leitung 10 in die Mischkammer 7 gepumpt. Über die Leitung 11 wird Metallsilicidstaub zugeführt. In der Mischkammer erfolgt eine Mischung dieser Bestandteile. Das entstandene Gemisch wird über die entsprechende Einführleitung in die Hauptbrennkammer 1 initiiert. Diese wird über die Eintrittsöffnungen 8 mit komprimierter Heißluft beaufschlagt. Der Sauerstoff der Luft reagiert blitzartig mit dem Wasserstoff des Silanöles. Durch die entstehenden sehr hohen Temperaturen reagiert der Stickstoff der Luft mit dem Silicium des Silanöles unter Bildung von Siliciumnitrid. Die gebildeten Verbrennungsgase bzw. - stäube (mit Überschuß von H₂) gelangen in die Nachbrennkammer 2, in die über die Leitung 9 komprimierte Kaltluft eingeführt wird, welche eine Verbrennung des überschüssigen H₂ zu Wasserdampf bewirkt. Die von der Nachbrennkammer 2 abgegebenen Gase und Stäube beaufschlagen die Turbinenschaufeln in der Turbinenkammer 3, so daß die Welle 5 in Drehungen versetzt wird. Die entsprechenden Gase und Stäube verlassen die Turbinenkammer über die Auslässe 16, gelangen in die Filtersäcke 20 in den Filterkammern 19, in denen die Stäube ausgefiltert werden, und treten über die Auslässe 21 in die Atmosphäre.

## Patentansprüche

1. Verfahren zum Antreiben einer Welle durch die folgenden Schritte:
a. Einführen von Siliciumwasserstoffen und von Luft in den ersten Teil einer doppelten Brennkammer.
b. Reagierenlassen des Wasserstoffes der Siliciumwasserstoffe mit einem Unterschuß von Sauerstoff der eingeführten Luft zur Erzeugung von erhöhten Temperaturen;
c. Reagierenlassen des Überschusses des eingeführten Luftstickstoffes bei den erhöhten Temperaturen mit dem Silicium der Siliciumwasserstoffe unter Bildung von Siliciumnitrid;
d. Abführung der Verbrennungsgase und -stäube und des nicht verbrannten Wasserstoffanteils aus dem ersten Teil in den zweiten Teil der doppelten Brennkammer und Vermischung mit einer großen Menge Luft unter Nachbrennen des Wasserstoffs; und
e. Weiterleiten der Verbrennungsgase und -stäube in eine Turbinenkammer zur Beaufschlagung von mit einer Welle verbundenen Turbinenschaufeln.

2. Verfahren nach Anspruch 1, **dadurch gekennzeichnet, daß** komprimierte Luft in den ersten und/oder zweiten Teil der Brennkammer eingeführt wird.

3. Verfahren nach Anspruch 2, **dadurch gekennzeichnet, daß** die komprimierte Luft durch einen Verdichter erzeugt wird, der von der Welle angetrieben wird.

4. Verfahren nach einem der vorangehenden Ansprüche, **dadurch gekennzeichnet, daß** Heißluft in die Brennkammer eingeführt wird.

5. Verfahren nach Anspruch 4, **dadurch gekennzeichnet, daß** die Heißluft durch Wärmeaustausch mit der Wandung der Brennkammer erzeugt wird.

6. Verfahren nach einem der vorangehenden Ansprüche, **dadurch gekennzeichnet, daß** die aus der Turbinenkammer abgegebenen Verbrennungsgase und -stäube gefiltert werden.

7. Verfahren nach einem der vorangehenden Ansprüche, **dadurch gekennzeichnet, daß** man als Siliciumwasserstoffverbindungen Silanöle verwendet.

8. Verfahren nach einem der vorangehenden Ansprüche, **dadurch gekennzeichnet, daß** den Siliciumwasserstoffen pulverförmiges Silicium und/oder Metallsilicide beigemengt werden.

9. Verfahren nach einem der vorangehenden Ansprüche, **dadurch gekennzeichnet, daß** die Zuführung von Luftsauerstoff so geregelt wird, daß keine Siliciumoxide entstehen und dadurch ein Teil des Wasserstoffes im ersten Teil der doppelten Brennkammer nicht verbrannt wird.

10. Antrieb zur Durchführung des Verfahren nach einem der vorangehenden Ansprüche, **dadurch gekennzeichnet, daß** er eine Brennkammer (1), eine in die Brennkammer (1) führende Zuleitung (7) für die Siliciumwasserstoffe, eine in die Brennkammer (1) führende Luftzuführleitung (12), eine mit der Brennkammer (1) verbundene Nachbrennkammer (2), eine in die Nachbrennkammer (2) führende Zuleitung (9) für Luft, eine Turbinenkammer (3), eine Verbindung zwischen der Nachbrennkammer (2) und der Turbinenkammer (3) zur Einführung der Verbrennungsgase und -stäube in die Turbinenkammer (3) und eine mit Turbinenschaufeln versehene Antriebswelle (5) in der Turbinenkammer (3) umfaßt.

11. Antrieb nach Anspruch 10, **dadurch gekennzeichnet, daß** er einen von der Antriebswelle (5) angetriebenen Verdichter zur Erzeugung von komprimierter Luft für die Brennkammer (1) und/oder Nachbrennkammer (2) aufweist.

12. Antrieb nach Anspruch 10 oder 11, **dadurch gekennzeichnet, daß** die Luftzuführleitung (12) in Kontakt mit der Brennkammer-, Nachbrennkammer- und/oder Turbinenkammerwandung steht.

13. Antrieb nach einem der Ansprüche 10 bis 12, **dadurch gekennzeichnet, daß** die Luftzuführleitungen (12, 9) mit Reglern für die Luftzufuhr versehen sind.

14. Antrieb nach einem der Ansprüche 10 bis 13, **dadurch gekennzeichnet, daß** der Turbinenkammerauslaß (16) in eine Filterkammer (19) führt, die einen zur Atmosphäre führenden Auslaß (21) besitzt.

## Claims

1. A method of driving a shaft, said method comprising the following steps:
a. introducing silicon hydrides and air into a first part of a double combustion chamber;
b. reacting the hydrogen of the silicon hydrides with a sub-stoichiometric amount of oxygen of the introduced air for the generation of increased temperatures;
c. reacting the excess of the introduced nitrogen of the air at the increased temperatures with the silicon of the silicon hydrides for the generation of silicon nitride;
d. discharging the combustion gases and combustion dusts and the non-burned hydrogen portion from the first part into the second part of the double combustion chamber and mixing them with a large amount of air for after-burning of the hydrogen; and
e. directing the combustion gases and combustion dusts into a turbine chamber for driving of turbine blades connected to a shaft.

2. The method according to claim 1, **characterized in that** compressed air is introduced into the first and/or second part of the combustion chamber.

3. The method according to claim 2, **characterized in that** the compressed air is generated by a compressor which is driven by the shaft.

4. The method according to one of the preceding claims, **characterized in that** hot air is introduced into the combustion chamber.

5. The method according to claim 4, **characterized in that** the hot air is generated by heat exchange with the wall of the combustion chamber.

6. The method according to one of the preceding claims, **characterized in that** the combustion gases and combustion dusts discharged from the turbine chamber are filtered.

7. The method according to one of the preceding claims, **characterized in that** silane oils are used as silicon hydride compounds.

8. The method according to one of the preceding claims, **characterized in that** powdered silicon and/or metal silicides are added to the silicon hydrides.

9. The method according to one of the preceding claims, **characterized in that** the supply of oxygen of the air is regulated in such a manner that no silicon oxides are generated and thereby a portion of the hydrogen is not burned in the first part of the double combustion chamber.

10. A drive means for carrying out the method according to one of the preceding claims, **characterized in that** it comprises a combustion chamber (1), a supply conduit (7) for the silicon hydrides leading into the combustion chamber (1), a supply conduit (12) for air leading into the combustion chamber (1), an afterburner chamber (2) connected with the combustion chamber (1), a supply conduit (9) for air leading into the afterburner chamber (2), a turbine chamber (3), a connection between the afterburner chamber (2) and the turbine chamber (3) for the introduction of the combustion gases and combustion dusts into the turbine chamber (3) and a drive shaft (5) with turbine blades within the turbine chamber (3).

11. The drive means according to claim 10, **characterized in that** it comprises a compressor for the generation of compressed air for the combustion chamber (1) and/or the afterburner chamber (2) which is driven by the drive shaft (5).

12. The drive means according to claim 10 or 11, **characterized in that** the air supply conduit (12) is in contact with the combustion chamber wall, afterburner chamber wall and/or turbine chamber wall.

13. The drive means according to one of the claims 10 to 12, **characterized in that** the air supply conduits (12, 9) are provided with regulating means for the air supply.

14. The drive means according to one of the claims 10 to 13, **characterized in that** the outlet (16) of the turbine chamber leads into a filter chamber (19) which has an outlet (21) leading to the atmosphere.

## Revendications

1. Procédé d'entraînement d'un arbre par les étapes suivantes :
a. introduire des hydrures de silicium et de l'air dans la première partie d'une double chambre de combustion,
b. laisser réagir l'hydrogène de l'hydrure de silicium avec un excès d'oxygène de l'air introduit pour produire des températures élevées,
c. laisser réagir l'excès de l'azote de l'air introduit aux températures élevées avec le silicium des hydrures de silicium, avec formation de nitrure de silicium,
d. évacuer les gaz et poussières de combustion et la fraction d'hydrogène qui n'a pas brûlé hors de la première partie de la double chambre de combustion dans la deuxième partie de celle-ci et mélanger une grande quantité d'air avec postcombustion de l'hydrogène, et
e. transférer les gaz et poussières de combustion dans une chambre de turbine pour l'admission aux ailes de turbine reliées à un arbre.

2. Procédé suivant la revendication 1, **caractérisé en ce que** de l'air comprimé est introduit dans la première et/ou la deuxième partie de la chambre de combustion.

3. Procédé suivant la revendication 2, **caractérisé en ce que** l'air comprimé est produit par un compresseur qui est entraîné par l'arbre.

4. Procédé suivant l'une des revendications précédentes, **caractérisé en ce que** de l'air chaud est introduit dans la chambre de combustion.

5. Procédé suivant la revendication 4, **caractérisé en ce que** l'air chaud est produit par un échange thermique avec la paroi de la chambre de combustion.

6. Procédé suivant l'une des revendications précédentes, **caractérisé en ce que** les gaz et poussières de combustion évacués de la chambre de turbine sont filtrés.

7. Procédé suivant l'une des revendications précédentes, **caractérisé en ce que**, comme composés d'hydrure de silicium, on utilise des huiles de silane.

8. Procédé suivant l'une des revendications précédentes, **caractérisé en ce qu'**aux hydrures de silicium, on mélange du silicium et/ou des siliciures métalliques pulvérulents.

9. Procédé suivant l'une des revendications précédentes, **caractérisé en ce que** l'admission d'oxygène de l'air est réglée de façon qu'on n'obtienne pas d'oxydes de silicium et que de ce fait une partie de l'hydrogène ne soit pas brûlée dans la première partie de la double chambre de combustion.

10. Moteur pour la mise en oeuvre du procédé suivant l'une des revendications précédentes, **caractérisé en ce qu'**il comprend une chambre de combustion (1), un conduit d'alimentation (7) pour les hydrures de silicium qui mène dans la chambre de combustion (1), un conduit d'amenée d'air (12) qui mène dans la chambre de combustion (1), une chambre de postcombustion (2) reliée à la chambre de combustion (1), un conduit d'alimentation (9) pour de l'air qui mène dans la chambre de postcombustion (2), une chambre de turbine (3), une communication entre la chambre de postcombustion (2) et la chambre de turbine (3) pour l'introduction des gaz et poussières de combustion dans la chambre de turbine (3) et un arbre d'entraînement (5) pourvu d'ailes de turbine et prévu dans la chambre de turbine (3).

11. Moteur suivant la revendication 10, **caractérisé en ce qu'**il présente un compresseur entraîné par l'arbre d'entrainement (5) pour produire de l'air comprimé destiné à la chambre de combustion (1) et/ou à la chambre de postcombustion (2).

12. Moteur suivant l'une des revendications 10 et 11, **caractérisé en ce que** le conduit d'amenée d'air (12) est en contact avec la paroi de la chambre de combustion, de la chambre de postcombustion et/ou de la chambre de turbine.

13. Moteur suivant l'une des revendications 10 à 12, **caractérisé en ce que** les conduits d'amenée d'air (12, 9) sont pourvus de régulateurs pour l'apport d'air.

14. Moteur suivant l'une des revendications 10 à 13, **caractérisé en ce que** la sortie de la chambre de turbine (16) mène dans une chambre de filtrage (19) qui possède une sortie (21) menant à l'atmosphère.
